# EUROPÄISCHE PATENTSCHRIFT

(11) **EP 1 183 975 B1**
(45) Veröffentlichungstag und Bekanntmachung des Hinweises auf die Patenterteilung: **07.12.2005**
(21) Anmeldenummer: 01810759.9
(22) Anmeldetag: 06.08.2001
(51) Int. Cl.: A47J 31/40, A47J 31/58

(54) **Kaffeemaschine zum Aufbrühen von in einer Kapsel abgepacktem Pulverkaffee**
Coffee machine which brews coffee beverages from cartridge of powder coffee
Machine à infusion de café à cartouches renfermant le café moulu

(30) Priorität: 30.08.2000 CH 169000
(43) Veröffentlichungstag der Anmeldung: 06.03.2002
(73) Patentinhaber: Saeco IPR Limited, Dublin 12 (IE)
(72) Erfinder: Schmed, Arthur, 8635 Oberdürnten (CH)
(74) Vertreter: Rottmann, Maximilian

(56) Entgegenhaltungen:
- EP-A- 0 891 734
- CH-A- 688 686
- US-A- 6 079 315

## Beschreibung

Die Erfindung betrifft eine Kaffeemaschine zum Aufbrühen von in einer Kapsel abgepacktem Pulverkaffee nach dem Oberbegriff des Anspruchs 1.

Zum Aufbrühen von in einer Kapsel abgepacktem Pulverkaffee werden bis anhin überwiegend halbautomatische Kaffeemaschinen verwendet, bei denen die Kapsel mit dem Verschlussdeckel nach unten in einen Siebhalter eingesetzt werden müssen, welch letzterer anschliessend manuell an der Kaffeemaschine befestigt wird. Die Kaffeemaschine weist im Bereich der Portionenhalterbefestigung einen mit radialen Austrittsöffnungen für die Durchleitung von Brühwasser versehenen Brühdorn auf, der den Boden der Kapsel beim Befestigen des Siebhalters an der Kaffeemaschine durchstösst. Der Siebhalter selber ist am Boden mit einer Vielzahl von Erhebungen versehen. Diese Erhebungen durchdringen den Deckel der Kapsel und perforieren ihn, sobald Brühwasser in den Siebhalter eingeleitet wird und die Kapsel durch den hydraulischen Überdruck gegen diese Erhebungen gedrückt wird. Beim Aufbrühvorgang wird das Brühwasser somit über den Brühdorn in die Kapsel eingeleitet, so dass es das darin aufgenommene Kaffeepulver durchströmen und über die Perforation im Deckel austreten kann. Das frisch aufgebrühte Kaffeegetränk kann über Auslässe, die auf der Unterseite des Siebhalters angeordnet sind, austreten.

Neuerdings kommen aber auch vollautomatische Kaffeemaschinen zum Einsatz, bei denen die Kapseln einem Magazin entnommen und danach einer Brühkammer zugeführt werden. Am Boden dieser Brühkammer sind Aufstechorgane angeordnet, welche die Kapsel beim Verschliessen der Brühkammer auf der Unterseite mit Schlitzen versehen, über die das Brühwasser in die Kapsel eindringen kann. Zum Perforieren des Deckels der Kapsel weist der zum Verschliessen der Brühkammer vorgesehene Verschlusskolben auf seiner Vorderseite eine Vielzahl von Erhebungen auf, welche den Deckel der Kapsel durchdringen, sobald Brühwasser in die Brühkammer eingeleitet wird und die Kapsel durch den hydraulischen Überdruck gegen diese Erhebungen gedrückt wird.

Da die Brühkammer bei derartigen Kaffeemaschinen zumeist als Teil eines Einschubmoduls ausgebildet ist, welches zum Reinigen aus der Kaffeemaschine herausgenommen werden kann, sollte sichergestellt werden, dass der Benutzer sich an diesen Aufstechorganen nicht verletzen kann, wenn er beispielsweise einen Finger in die Brühkammer hineinstreckt.

In der US 6,079,315 ist eine Brüheinheit mit einer Brühkammer zur Aufnahme einer Getränkekapsel beschrieben, die mit einem oberen und einem unteren Brühdom 84, 126 zum Einleiten des Brühwassers bzw. Ableiten des aufgebrühten Getränks versehen ist. Die eigentliche Erfindung besteht darin, einen Auswurfmechanismus zum Auswerfen der ausgelaugten Getränkekapsel vorzuschlagen, welcher beim Hochfahren des Verschlussorgans die Brühkammer nach unten dreht, so dass die ausgelaugte Getränkekapsel aus der Brühkammer herausfällt. Dieser Auswurfmechanismus weist u.a. eine bewegliche Plattform 86 auf, welche mit zwei seitlichen "Auswurfarmen 46, 48" versehen ist. Die Plattform ist mittels einer Feder in Richtung des Verschlussorgans belastet. Am Boden der Plattform ist eine runde Öffnung 88 angeordnet, durch welche sich der untere Brühdom erstrecken kann, wenn die Plattform vom Verschlusskolben entgegen der Federkraft nach unten gedrückt wird.

Es ist daher die Aufgabe der Erfindung, eine Kaffeemaschine zum Aufbrühen von in einer Kapsel abgepacktem Pulverkaffee gemäss dem Oberbegriff des Anspruchs 1 derart zu verbessern, dass die Verletzungsgefahr für den Benutzer minimiert wird, auch wenn mehrere Aufstechorgane vorgesehen sind.

Diese Aufgabe wird durch die im Kennzeichen des Anspruchs 1 angeführten Merkmale gelöst.

Durch das Vorsehen eines in Relation zu den Aufstechorganen bewegbaren Schutzorgans, welches zwischen einer Ruhe- und einer Wirkstellung verschiebbar ist, wobei es in der Ruhestellung den Zugriff zu den Aufstechorganen zu verwehren bestimmt ist, und wobei die die Aufstechorgane kreisringförmig angeordnet sind und das Schutzorgan eine zentrale Ausnehmung sowie seitliche, mit den Aufstechorganen in der Lage korrespondierende Ausnehmungen aufweist, kann das Verletzungsrisiko weitgehend ausgeschaltet werden. Vorzugsweise wird das Schutzorgan beim Verschliessen der Brühkammer vom Verschlussorgan von der Ruhe- in die Wirkstellung bewegt, in welch letzterer die Kapsel von den Aufstechorganen mit Schlitzen versehen werden kann.

Nachfolgend wird ein Ausführungsbeispiel der Erfindung anhand von Zeichnungen näher erläutert. In diesen Zeichnungen zeigt:
Fig. 1 einen Längsschnitt durch die schematisch dargestellte Brühvorrichtung mitsamt einer aufzubrühenden Kapsel im Ausgangszustand;
Fig. 2 eine Draufsicht auf die Brühvorrichtung gemäss Fig. 1.

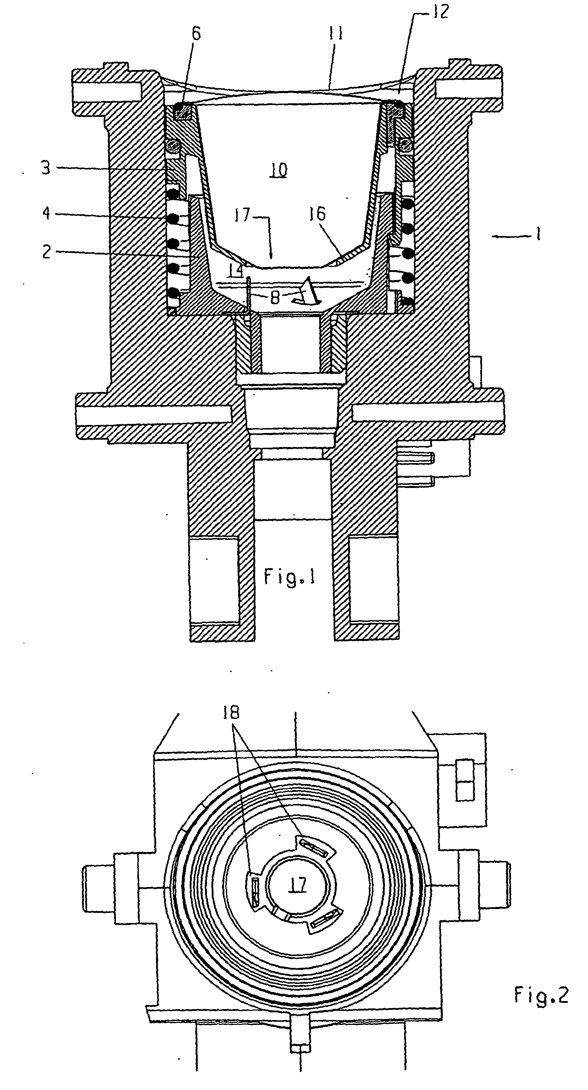

Fig. 1 zeigt eine schematisch dargestellte Brühvorrichtung, welche im vorliegenden Fall einen Teil einer vollautomatischen Kaffeemaschine zum Aufbrühen von in einer Kapsel 10 abgepacktem Pulverkaffee darstellt. Vorzugsweise ist die Brühvorrichtung zusammen mit einem nicht dargestellten Verschlusskolben auf einem Einschubmodul angeordnet, welch letzteres zur Reinigung mit wenigen Handgriffen aus der Kaffeemschine entnommen und auch wieder in diese eingesetzt werden kann. Die Brühvorrichtung weist ein Brühkammergehäuse 1 auf, in dem zwei die eigentliche Brühkammer 14 begrenzende Kammerteile 2, 3 aufgenommen sind, welche im vorliegenden Fall vertikal übereinander angeordnet sind. Der Kammeroberteil 3 ist in axialer Richtung relativ zum Kammerunterteil 2 verschiebbar, wobei der Kammeroberteil 3 mittels einer Feder 4 vorbelastet ist, welche den Kammeroberteil 3 in die hier gezeigte obere Ruhestellung gegen einen Anschlag drückt. Zum Verschliessen der Brühkammer 14 wird das Brühkammergehäuse 1 zuerst verschwenkt und dann gegen den nicht ersichtlichen Verschlusskolben hochgefahren. Die zum Bewegen des Brühkammergehäuses 1 notwendigen Antriebsmittel sind ebenfalls nicht dargestellt. Am Boden der Brühkammer 14 sind drei Aufstechorgane 8 in Form von schräggestellten Messern vorgesehen, welche die Rückseite der Kapsel 10 aufzustechen bestimmt sind. Aus dieser Schnittdarstellung sind jedoch nur zwei der drei Aufstechorgane 8 ersichtlich. Der Kammeroberteil 3 weist einen sich nach unten erstreckende Fortsatz 16 auf, dessen Form im wesentlichen mit der Form der Aussenseite der Kapsel 10 korrespondiert. Der Fortsatz 16 weist eine zentrale Öffnung 17 auf, an welche sich in radialer Richtung Ausnehmungen anschliessen.

Fig. 2 zeigt die Brühvorrichtung in einer Draufsicht. Aus dieser Darstellung sind insbesondere die drei Aufstechorgane 8 sowie die zentrale Öffnung 17 und die Ausnehmungen 18 im Fortsatz ersichtlich.

Der Fortsatz 16 soll verhindern, dass sich Personen an den Aufstechorganen 8 insbesondere an den Fingern verletzen können. Der Durchmesser der zentralen Öffnung 17 im Fortsatz 16 sowie die Länge der Ausnehmungen 18 sind so gewählt, dass ein Finger einer ausgewachsenen Person unter normalen Umständen weder durch die Öffnung 17 hindurchgestreckt noch seitlich soweit in die Schlitze 18 hineingeführt werden kann, dass die Aufstechorgane 8 den Finger verletzen können. Im vorliegenden Fall hat die zentrale Öffnung 17 einen Durchmesser von ca. 13 Millimetern und die Ausnehmungen 18 eine mittlere Länge von ca. 5 Millimetern.

Beim Hochfahren des Brühkammergehäuses 1 fährt der Verschlusskolben (nicht dargestellt) in das Brühkammergehäuse 1 ein und legt sich auf der Oberseite am Brühkammeroberteil 3 an, so dass letzterer mitsamt dem Fortsatz 16 und der Kapsel 10 entgegen der Kraft der Feder 4 nach unten bewegt wird. Durch die Relativbewegung des Fortsatzes 16 und der Kapsel 10 gegenüber den Aufstechorganen 8 dringen die Aufstechorgane 8 von unten in die Kapsel 10 ein und versehen diese mit Schlitzen. Durch die Schrägstellung der messerförmigen Aufstechorgane 8 wird der Kapselboden mit länglichen Schlitzen S versehen, die länger sind als das entsprechende Aufstechorgan 8. In der oberen Endstellung des Brühkammergehäuses 1 steht die Unterseite des Brühkammeroberteils 3 an der Oberseite des Brühkammerunterteils 2 an und der Verschlusskolben drückt die Kapsel 10 nach unten, so dass diese mit ihrem Rand 12 an einer Dichtung 6 des Brühkammeroberteils 3 dichtend anliegt und der Kapselvorderteil gegenüber dem Kapselhinterteil hydraulisch abgedichtet ist.

Nachdem die Kapsel 10 auf der Rückseite aufgestochen wurde und der Kapselvorderteil gegenüber dem Kapselhinterteil hydraulisch abgedichtet ist, kann der Brühkammer 14 Brühwasser zugeführt werden, welches über die Öffnung 17 und die Ausnehmungen 18 auf die Rückseite der Kapsel 10 gelangen kann, so dass diese hydraulisch nach oben gegen das Verschlussorgan gedrückt wird. Dabei durchdringen die Erhebungen des Verschlussorgans den Deckel 11 der Kapsel 10 und perforieren diesen. Über die von den Aufstechorganen 8 erzeugten Schlitze S kann nun das Brühwasser in das Innere der Kapsel 10 einströmen. Indem das Wasser von aussen her in die Kapsel 10 eindringt und nur schmale Schlitze S ausgenommen werden kann sichergestellt werden, dass beim Aufbrühen kein die Kaffeemaschine verschmutzendes Kaffeepulver aus der Kapsel 10 herausgespült wird. Das aufgebrühte Kaffeegetränk kann über die Öffnungen im Deckel 11 der Kapsel 10 austreten und über nicht näher dargestellte Leitungen zum Kaffeeauslass strömen.

Nach dem Aufbrühen der Kaffeeportion wird das Brühkammergehäuse 1 wieder nach unten gefahren und in die Ausgangsstellung verschwenkt. Nun wird die mit ausgelaugtem Kaffeepulver versehene Kapsel 10 über nicht näher dargestellte Mittel aus dem Brühkammergehäuse 1 ausgestossen indem über die Öffnung 17 ein Stössel in die Brühkammer 14 eindringt und die Kapsel soweit nach oben schiebt bis sie durch die Schwerkraft, bei schräggestellter Brühkammer, oder durch ein fremdbetätigtes Organ entfernt und einem Auffangbehälter zugeführt wird. Es versteht sich, dass die Öffnung 17 nur dann notwendig ist, wenn zum Ausstossen der Kapsel ein solch separates fremdbetätigtes Organ vorgesehen ist, das über diese Öffnung in die Brühkammer 14 eingefahren wird. Sofern kein solches Ausstossorgan vorgesehen ist, kann auf die genannte Öffnung durchaus verzichtet werden.

## Patentansprüche

1. Kaffeemaschine zum Aufbrühen von in einer Kapsel (10) abgepacktem Pulverkaffee, mit einer Brühkammer (14) zur Aufnahme der Kapsel (10), mit in die Brühkammer (14) hineinragenden Aufstechorganen (8) zum Aufstechen der Kapsel (10), sowie einem in Relation zu den Aufstechorganen (8) bewegbaren Schutzorgan (16), welches zwischen einer Ruhe- und einer Wirkstellung verschiebbar ist, wobei es in der Ruhestellung den Zugriff zu den Aufstechorganen (18) zu verwehren bestimmt ist, **dadurch gekennzeichnet, dass** die Aufstechorgane (8) schräggestellt und kreisringförmig angeordnet sind und das Schutzorgan (16) eine zentrale Ausnehmung (17) sowie seitliche, mit den Aufstechorganen (8) in der Lage korrespondierende Ausnehmungen (18) aufweist, und dass Aufstechorgane (8) vorgesehen sind, welche eine Aufstechöffnung erzeugen, deren Querschnitt grösser ist als der mittlere Querschnitt des jeweiligen Aufstechorgans (8).

2. Kaffeemaschine nach Anspruch 1, **dadurch gekennzeichnet, dass** das Schutzorgan (16) beim Verschliessen der Brühkammer (14) von einem Verschlussorgan von der Ruhe- in die Wirkstellung bewegt wird.

3. Kaffeemaschine nach Anspruch 1 oder 2, **dadurch gekennzeichnet, dass** ein Brühkammergehäuse (1) vorgesehen ist, welches zwei die Brühkammer (14) begrenzende Kammerteile (2, 3) aufnimmt, wobei der obere Kammerteil (3) mittels einer Feder (4) derart vorbelastet ist, dass er entgegen der Federkraft in axialer Richtung relativ zum unteren Kammerteil (2) verschiebbar ist, und wobei das Schutzorgan (16) in Form eines Fortsatzes am oberen Kammerteil (3) angeformt ist.

4. Kaffeemaschine nach Anspruch 3, **dadurch gekennzeichnet, dass** der obere Kammerteil (3) zum vertikalen Abstützen der Kapsel (10) vorgesehen ist und vom Verschlussorgan axial soweit bewegbar ist, dass beim Verschliessen der Brühkammer (14) die Kapsel (10) in Relation zu den Aufstechorganen (8) soweit bewegbar ist, dass die Aufstechorgane (8) in die Kapsel (10) eindringen.

5. Kaffeemaschine nach einem der vorhergehenden Ansprüche, **dadurch gekennzeichnet, dass** die beiden die Brühkammer (14) begrenzenden Kammerteile (2, 3) im eingeschobenen Zustand eine Brühkammer begrenzen, deren innere Form im wesentlichen mit der äusseren Form der Kapsel (10) korrespondiert.

## Claims

1. Coffee machine for brewing coffee powder packaged in a capsule (10), having a brewing chamber (14) for accommodating the capsule (10), having puncturing elements (8) for puncturing the capsule (10) which project into the brewing chamber (14), and having a protective element (16) which can be moved in relation to the puncturing elements (8) and can be shifted between a rest position and an active position, the purpose of the said protective element being to prevent access to the puncturing elements (8) in the rest position, **characterized in that** the puncturing elements (8) are inclined and arranged in the form of a ring, and the protective element (16) has a central recess (17) and lateral recesses (18) whose positions correspond to the puncturing elements (8), and **in that** puncturing elements (8) are provided which produce a punctured opening whose cross section is greater than the average cross section of the respective puncturing element (8).

2. Coffee machine according to Claim 1, **characterized in that** the protective element (16) is moved from the rest position to the active position when the brewing chamber (14) is closed by a closure element.

3. Coffee machine according to Claim 1 or 2,
**characterized in that** a brewing-chamber housing (1) is provided which accommodates two chamber parts (2, 3) which bound the brewing chamber (14), the upper chamber part (3) being prestressed by means of a spring (4) in such a way that it can be displaced relative to the lower chamber part (2) in the axial direction against the spring force, and the protective element (16) being integrally formed on the upper chamber part (3) in the form of a protrusion.

4. Coffee machine according to Claim 3, **characterized in that** the upper chamber part (3) is provided to support the capsule (10) vertically and can be axially moved by the closure element to such an extent that, when the brewing chamber (14) is closed, the capsule (10) can be moved in relation to the puncturing elements (8) to such an extent that the puncturing elements (8) penetrate the capsule (10).

5. Coffee machine according to one of the preceding claims, **characterized in that**, in the inserted state, the two chamber parts (2, 3) which bound the brewing chamber (14) bound a brewing chamber whose inner shape substantially corresponds to the outer shape of the capsule (10).

## Revendications

1. Machine à café servant à infuser du café en poudre emballé dans une capsule (10), comprenant une chambre d'infusion (14) destinée à recevoir la capsule (10), des organes de percement (8) faisant saillie dans la chambre d'infusion (14) pour percer la capsule (10), ainsi qu'un organe protecteur (16) pouvant être déplacé par rapport aux organes de percement (8) depuis une position de repos vers une position d'action et vice versa, organe protecteur qui est destiné, en position de repos, à refuser l'accès aux organes de percement (18), **caractérisée en ce que** les organes de percement (8) sont disposés inclinés et de manière à former un cercle, **en ce que** l'organe protecteur (16) présente un creux central (17), ainsi que des creux (18) latéraux, dont la position correspond à celle des organes de percement (8), et **en ce que** sont prévus des organes de percement (8) produisant une ouverture de percement dont la section transversale est supérieure à la section transversale moyenne de l'organe de percement (8) respectif.

2. Machine à café selon la revendication 1, **caractérisée en ce que** l'organe protecteur (16) est déplacé par un organe de fermeture depuis une position de repos vers une position d'action lors de la fermeture de la chambre d'infusion (16).

3. Machine à café selon la revendication 1 ou 2, **caractérisée en ce qu'**est prévu un boîtier de chambre d'infusion (1) qui reçoit deux moitiés (2, 3) limitant la chambre d'infusion (14), la moitié supérieure (3) de la chambre d'infusion étant sollicitée au moyen d'un ressort (4) de manière qu'elle soit déplaçable par rapport à la moitié inférieure de la chambre d'infusion, dans le sens axial, à l'encontre de la force du ressort, l'organe de protection (16) étant rapporté sous forme d'un prolongement sur la moitié supérieure (3) de la chambre d'infusion.

4. Machine à café selon la revendication 3, **caractérisée en ce que** la moitié supérieure (3) de la chambre d'infusion sert d'appui vertical à la capsule (10) et **en ce que**, lors de la fermeture de la chambre d'infusion (14), elle peut être déplacée axialement par l'organe de fermeture, de manière que la capsule (10) puisse être déplacée par rapport aux organes de percement (8) jusqu'à ce que ceux-ci pénètrent dans la capsule (10).

5. Machine à café selon l'une des revendications précédentes, **caractérisée en ce que**, à l'état introduites, les deux moitiés (2, 3) limitent une chambre d'infusion (14), dont la forme intérieure correspond essentiellement à la forme extérieure de la capsule (10).
